# EUROPEAN PATENT APPLICATION

(11) **EP 2 468 450 A1**
(43) Date of publication of application: **27.06.2012**
(21) Application number: 11779078.2
(22) Date of filing: 12.05.2011
(51) Int. Cl.: B23K 35/26, B23K 35/22, C22C 13/00, C22C 13/02

(54) **LOW-SILVER-CONTENT SOLDER ALLOY AND SOLDER PASTE COMPOSITION**

(30) Priority: 29.10.2010 JP 2010242916
(71) Applicant: Harima Chemicals, Inc., Hyogo 675-0019 (JP)
(72) Inventor: IMAMURA, Yoji, Kakogawa-shi Hyogo 675-0019 (JP); IKEDA, Kazuki, Kakogawa-shi Hyogo 675-0019 (JP); PIAO, JinYu, Kakogawa-shi Hyogo 675-0019 (JP); TAKEMOTO, Tadashi, Tsukuba-shi Ibaraki 300-2635 (JP)
(74) Representative: HOFFMANN EITLE
(86) International application number: PCT/JP2011/060983
(87) International publication number: WO 2012/056753

(57) **Abstract**

A low silver solder alloy of the present invention comprises 0.05-2.0% by mass of silver; 1.0% by mass or less of copper; 3.0% by mass or less of antimony; 2.0% by mass or less of bismuth; 4.0% by mass or less of indium; 0.2% by mass or less of nickel; 0.1% by mass or less of germanium; 0.5% by mass or less of cobalt (provided that none of the copper, the antimony, the bismuth, the indium, the nickel, the germanium, and the cobalt is 0% by mass); and the residue is tin. According to the present invention, the long-term reliable low silver solder alloy is provided, wherein the low silver solder alloy permits the cost reduction by decreasing the Ag content, and has the excellent stretch, melting point, and strength, and also has the high fatigue resistance (thermal fatigue resistance).

## Description

### TECHNICAL FIELD

The present invention relates to a low silver solder alloy, particularly, a Sn-Ag-Cu (tin-silver-copper) based solder alloy, and a solder paste composition, for use in solder joining of circuit components or the like onto a circuit substrate, such as a printed circuit substrate of electronic device.

### BACKGROUND ART

Conventionally, as a solder alloy for use in metal joining of electrical or electronic device, a solder alloy containing Pb (lead) (for example, a solder alloy containing 63% by mass of Sn and 37% by mass of Pb) has been used generally. However, the influence of lead on environment is a matter of concern.

Recently, various lead-free solder alloys, such as an Sn-Cu based alloy, an Sn-Ag-Cu based alloy (patent documents 1 to 3), an Sn-Bi(bismuth) based alloy, an Sn-Zn (zinc) based alloy (patent document 4), each of which contains no lead, have been considered.

The patent document 1 discloses a solder ball in which one or two or more selected from Ge, Ni, P, Mn, Au, Pd, Pt, S, Bi, Sb, and In are added to Sn-Ag-Cu based alloy in predetermined ratio. The Sn-Ag-Cu based alloy of the patent document 1 contains 1.0-4.5% by mass of Ag.

The patent document 2 discloses a linear solder for an electronic component in which 0.001-5.0% of at least one selected from Ag, Cu, Au, Ni, In, Bi, Ge, P, Al, Zn, Sb, and Fe is added to Sn.

The patent document 3 discloses a Pb-free solder alloy containing 0.1-5% by mass of each of Ag and Cu; 10% by mass or less of at least one selected from Sb, Bi, Cd, In, Ag, Au, Ni, Ti, Zr, and Hf; 10% by mass or less of at least one selected of Ge, Zn, P, K, Cr, Mn, Na, V, Si, Al, Li, Mg, and Ca; and the residue is Sn.

The patent document 4 discloses a lead-free solder alloy containing Zn, Mg, and Sn as essential ingredients, and a predetermined amount of one or more selected from Al, Cu, Ge, Ag, Bi, In, Sb, Ni, and P.

Among these lead-free solder alloys, the Sn-Ag-Cu based alloy has an excellent balance between solder wettability and strength, and therefore is progressing towards practical application. However, the Ag contained in the Sn-Ag-Cu based alloy is expensive and increases in costs, thus constituting the chief obstacle to the spread of the Sn-Ag--Cu based alloy (lead-free solder).

Although it would be possible to decrease the Ag content, fatigue resistance (particularly, thermal fatigue resistance) is deteriorated by a mere decrease of the Ag content, thus causing the problems of bad connection and the like. An attempt to further improve the strength of the Sn-Ag-Cu based alloy can cause problems, namely, a deteriorated stretch, an increase in melting point, and the like.

### PRIOR ART DOCUMENTS

### PATENT DOCUMENTS

Patent document 1: Japanese Unexamined Patent Publication No. 2005-103645
Patent document 1: Japanese Unexamined Patent Publication No. 2006-255762
Patent document 1: Japanese Unexamined Patent Publication No. 2008-31550
Patent document 1: Japanese Unexamined Patent Publication No. 2006-255784

### SUMMARY OF THE INVENTION

### PROBLEMS TO BE SOLVED BY THE INVENTION

The present invention is directed to provide a long-term reliable low silver solder alloy which permits cost reduction by decreasing the Ag content, and has excellent stretch, melting point, and strength, and also has high fatigue resistance (thermal fatigue resistance), and providing a solder paste composition using the low silver solder alloy.

### MEANS FOR SOLVING THE PROBLEMS

The present inventor has conducted intensive research to solve the above-described problems. As the result, the present invention has been completed based on the findings that the use of tin as a main ingredient, and the incorporation of a plurality of specific metals in specific proportions achieve the long-term reliable low silver solder alloy which permits the cost reduction by decreasing the Ag content, and has the excellent stretch, melting point, and strength, and also has the high fatigue resistance (thermal fatigue resistance).

That is, the present invention includes the following features.
(1) A low silver solder alloy comprising 0.05-2.0% by mass of silver; 1.0% by mass or less of copper; 3.0% by mass or less of antimony; 2.0% by mass or less of bismuth; 4.0% by mass or less of indium; 0.2% by mass or less of nickel; 0.1% by mass or less of germanium; 0.5% by mass or less of cobalt (provided that none of the copper, the antimony, the bismuth, the indium, the nickel, the germanium, and the cobalt is 0% by mass); and the residue is tin.
(2) The low silver solder alloy as set forth in item (1), wherein the silver content is 0.05-1.0% by mass.
(3) The low silver solder alloy as set forth in item (1) or (2), wherein the copper content is 0.01-0.9% by mass.
(4) The low silver solder alloy as set forth in any one of items (1) to (3), wherein the antimony content is 0.1-3.0% by mass.
(5) The low silver solder alloy as set forth in any one of items (1) to (4), wherein the bismuth content is 0.1-2.0% by mass.
(6) The low silver solder alloy as set forth in any one of items (1) to (5), wherein the indium content is 0.1-3.0% by mass.
(7) The low silver solder alloy as set forth in any one of items (1) to (6), wherein the nickel content is 0.001-0.2% by mass.
(8) The low silver solder alloy as set forth in any one of items (1) to (7), wherein the germanium content is 0.001-0.1% by mass.
(9) The low silver solder alloy as set forth in any one of items (1) to (8), wherein the cobalt content is 0.001-0.5% by mass.
(10) The low silver solder alloy as set forth in any one of items (1) to (9), wherein the low silver solder alloy has a melting point of 200-250°C.
(11) A solder paste composition containing solder powder of the low silver solder alloy as set forth in any one of items (1) to (10), and a soldering flux.
(12) The solder paste composition as set forth in item (11), wherein the solder powder of the low silver solder alloy and the soldering flux are contained in a mass ratio of 70:30 to 90:10.

### EFFECT OF THE INVENTION

According to the present invention, the long-term reliable low silver solder alloy is provided, wherein the low silver solder alloy permits the cost reduction by decreasing the Ag content, and has the excellent stretch, melting point, and strength, and also has the high fatigue resistance (thermal fatigue resistance), and the solder paste composition using the low silver solder alloy is provided.

### PREFERRED EMBODIMENTS FOR CARRYING OUT THE INVENTION

The low silver solder alloy of the present invention is described below.

The low silver solder alloy of the present invention contains 0.05-2.0% by mass of silver; 1.0% by mass or less of copper; 3.0% by mass or less of antimony; 2.0% by mass or less of bismuth; 4.0% by mass or less of indium; 0.2% by mass or less of nickel; 0.1% by mass or less of germanium; 0.5% by mass or less of cobalt (provided that none of the copper, the antimony, the bismuth, the indium, the nickel, the germanium, and the cobalt is 0% by mass); and the residue is tin.

The low silver solder alloy of the present invention contains the silver in ratio of 0.05-2.0% by mass. Due to the silver, the low silver solder alloy of the present invention improves the solder wettability thereof, thereby suppressing the occurrence of poor soldering. The silver also contributes to fatigue resistance. When the silver content is less than 0.05% by mass, the effect of the copper (erosion resistance) is hindered, and the soldering wettability is also poor. On the other hand, when the silver content is more than 2.0% by mass, the silver counteracts the effect of the cobalt and the germanium (fatigue resistance), thus hindering improvements in impact resistance and fatigue resistance. Further, the costs increase with increasing the silver content.

The silver content is preferably 0.05-1.0% by mass, more preferably 0.1-1.0% by mass.

The low silver solder alloy of the present invention contains the copper in ratio of 1.0% by mass or less (except for 0% by mass). Due to the copper, the low silver solder alloy having excellent erosion resistance is obtained. When no copper is used (namely, when the copper content is 0% by mass), the erosion resistance is poor. On the other hand, when the copper content is more than 1.0% by mass, the erosion resistance can be imparted, whereas thermal fatigue properties are poor.

The copper content is preferably 0.01-0.9% by mass, more preferably 0.1-0.9% by mass.

The low silver solder alloy of the present invention contains the antimony in ratio of 3.0% by mass or less (except for 0% by mass). Due to the antimony, the low silver solder alloy of the present invention improves the heat resistance and strength thereof. Further, since the antimony and tin form a solid solution, the strength is enhanced. Therefore, the thermal fatigue properties of the alloy are improved. When no antimony is used (namely, when the antimony content is 0% by mass), neither the strength nor the thermal fatigue properties is improved. On the other hand, when the antimony content is more than 3.0% by mass, the strength and the thermal fatigue properties are poor. Further, when used as the solder paste composition described later, there are problems with the solder wettability and the fatigue resistance.

The antimony content is preferably 0.1-3.0% by mass, more preferably 0.2-3.0% by mass.

The low silver solder alloy of the present invention contains the bismuth in ratio of 2.0% by mass or less (except for 0% by mass). Due to the bismuth, the low silver solder alloy of the present invention improves the strength thereof. When no bismuth is used (namely, when the indium content is 0% by mass), no strength improvement is observed, and the melting point is not lowered. On the other hand, when the bismuth content is more than 2.0% by mass, the alloy becomes fragile and the strength thereof is poor due to metal properties of bismuth metal itself.

The bismuth content is preferably 0.1-2.0% by mass, more preferably 0.5-2.0% by mass.

The low silver solder alloy of the present invention contains indium in ratio of 4.0% by mass or less (except for 0% by mass). Due to the indium, the low silver solder alloy of the present invention has a fine structure, the strength of the alloy is improved. When no indium is used (namely, when the indium content is 0% by mass), no strength improvement is observed. On the other hand, when the indium content is more than 4.0% by mass, the strength is poor.

The indium content is preferably 0.1-3.0% by mass, more preferably 0.2-3.0% by mass.

The low silver solder alloy of the present invention contains the nickel in ratio of 0.2% by mass or less (except for 0% by mass). Due to the nickel, since the low silver solder alloy of the present invention has a fine crystal structure, the strength and thermal fatigue of the alloy are improved. When no nickel is used (namely, when the nickel content is 0% by mass), no improvement is observed in the strength and the thermal fatigue properties. On the other hand, when the nickel content is more than 0.2% by mass, the strength and thermal fatigue properties are poor.

The nickel content is preferably 0.001-0.2% by mass, more preferably 0.001-0.1% by mass.

The low silver solder alloy of the present invention contains the germanium in ratio of 0.1% by mass or less (except for 0% by mass). Since the germanium forms a thin oxide on the surface of the solder in the low silver solder alloy of the present invention, the solder wettability and fatigue resistance of the alloy are improved. When no germanium is used (namely, when the germanium content is 0% by mass), the solder wettability and fatigue resistance are poor. Further, a synergistic effect of stretch by the combined use of the cobalt cannot be obtained. On the other hand, when the germanium content is more than 0.1% by mass, more oxides are formed (namely, the solder surface is excessively oxidized), thereby adversely affecting the solder wettability, which in its turn deteriorates joining strength.

The germanium content is preferably 0.001-0.1-% by mass, more preferably 0.002-0.007% by mass.

The low silver solder alloy of the present invention contains the cobalt in ratio of 0.5o by mass or less (except for 0% by mass). Due to the cobalt, the low silver solder alloy of the present invention improves the fatigue resistance thereof by the following facts (I) and (II).
(I) An intermetallic compound layer, such as Sn-Cu, Sn-Co, and Sn-Cu-Co, formed on a soldering interface is formed relatively thick in parallel to a. soldering surface, and this layer is less subject to growth under thermal load or thermal change load.
(II) The cobalt is dispersedly deposited into the solder, and enhances the solder.

When no cobalt is used (namely, when the cobalt content is 0% by mass), the fatigue resistance is poor. Further, a synergistic effect of stretch by the combined use of the germanium cannot be obtained. On the other hand, when the cobalt content is more than 0.5% by mass, the intermetallic compound layer becomes thick, and the hardness of the solder is also increased. Consequently, stiffness is lowered, and the fatigue resistance is not improved.

The cobalt content is preferably 0.001-0.5% by mass, more preferably 0.001-0.05% by mass.

Particularly, as in the case of the low silver solder alloy of the present invention, the coexistence of the cobalt and the germanium in the solder alloy imparts remarkably large stretch, allowing the solder alloy to endure deformation due to thermal stress load. Therefore, the low silver solder alloy of the present invention has the excellent fatigue resistance. This remarkable stretch is owing to the synergistic effect by the combined use of the cobalt and the germanium. The synergistic effect cannot be produced when the cobalt or germanium is used singly, or even with the addition of other metal. Likewise, this remarkable stretch does not occur when the cobalt and the germanium are added to a system having a high silver content.

Although these metals contained in the low silver solder alloy of the present invention are preferably of high purity, they may contain trace impurities (unavoidable impurities) so long as the effect of the present invention is not hindered. Further, these metals are preferably used in the shape of powder, from the viewpoint of facilitating uniform melt thereof. Although the mean particle diameters of their respective powders are not limited particularly, they are preferably 5-100 urn, more preferably 15-50 urn.

The melting point of the low silver solder alloy of the present invention is not limited particularly. However, when the melting point is too high, it is necessary to melt the solder alloy at a high temperature during metal-joining operation. Hence, the melting point of the low silver solder alloy of the present invention is preferably 200-250°C, more preferably 220-240°C.

The low silver solder alloy of the present invention is used for example as a solder paste joining material (solder paste composition) or a resin flux cored solder.

The solder paste composition contains the solder powder composed of the low silver solder alloy, and the soldering flux (hereinafter referred to simply as "flux" in some cases).

The solder powder has a mean particle diameter of preferably 5-100 µm, more preferably 15-50 µm. The shape of particles is not limited particularly. The shape of the particles is an optional shape, such as a substantially complete spherical shape, a flat block shape, a needle shape, or an undetermined shape, and is suitably selected according to the performance of the solder paste composition requiring thixotropic nature, sagging resistance, or the like.

The flux is composed mainly of a base resin (such as rosin or acrylic resin), and an active agent (hydrohalide salts of amines, such as ethylamine or propylamine; or organic carboxylic acids, such as lactic acid, citric acid, or benzoic acid), and a thixotropic agent (hydrogenated castor oil, beeswax, carnauba wax, or the like). When the flux is used in its liquid state, an organic solvent is further contained therein.

The flux is not limited particularly, and well-known fluxes heretofore employed may be used.

The solder paste composition preferably contains the solder powder composed of the low silver solder alloy, and the flux in a mass ratio of 70:30 to 90:10.

The resin flux cored solder is obtained by molding the low silver solder alloy into a linear shape with the flux as a core, by a well-known method (for example, extrusion molding).

According to the present invention, the long-term reliable low silver solder alloy is provided, wherein the low silver solder alloy permits the cost reduction by decreasing the Ag content, and has the excellent stretch, melting point, and strength, and also has the high fatigue resistance (thermal fatigue resistance), and the solder paste composition using the low silver solder alloy is provided. Therefore, the present invention is useful in the solder joining of the circuit substrates of electric or electronic device, or the like.

### [EXAMPLES]

The present invention is further described in detail with reference to examples and comparative examples, but it should be construed that the present invention is in no way limited to the following examples.

### (Examples 1 to 9)

Powders of metals shown in Table 1 were respectively mixed in proportions shown in Table 1. Low silver solder alloys were respectively prepared by melting and uniformizing these metal mixtures in a melting furnace.

The low silver solder alloys obtained in Examples 1 to 9 were respectively powderized by a well-known method (the particle diameters of these powders were 25-38 µm). Then, 88% by mass of each of the obtained solder powders and 12% by mass of a well-know flux were mixed together to obtain each solder paste composition.

### (Comparative Examples 1 to 31)

Low silver solder alloys were respectively prepared in the same manner as Example 1, except that a predetermined metal selected from the powders of tin, silver, copper, antimony, bismuth, indium, cobalt, nickel, and germanium was used in a proportion shown in Table 1.

The low silver solder alloys obtained in Comparative Examples 1 to 31 were respectively powderized by the well-known method (the particle diameters of these powders were 25-38 µm). Then, 88% by mass of each of the obtained solder powders and 12% by mass of the well-known flux were mixed together to obtain each solder paste composition.

The solder paste compositions obtained in these examples and these comparative examples were subjected to a temperature cycling test in order to examine changes in bulk strength and bulk stretch after 1000 cycles. The results thereof were shown in Table 2.

### <Joining Strength>

Soldering was carried out by printing each of the solder paste compositions on a chip component mounting substrate, followed by heating and melting (reflow). Joining strength was measured by using the obtained substrate as a test substrate. The joining strength was found by measuring it twenty times with a strength meter ("BOND TESTER SERIES 4000" manufactured by Dage Precision Industries, Inc.), and by calculating an average value from the measuring results.

Subsequently, the test board was subjected to the temperature cycling test (holding at -40°C and 125°C for 30 minutes, respectively), and the joining strength was measured after 500 cycles and 1000 cycles, respectively.

### <Bulk Strength and Bulk Stretch>

Bulk strength and bulk stretch were measured according to JIS Z 3198-2. That is, a test piece having a prescribed shape (evaluation interval *φ*10.0 mm) was manufactured, and the measurements thereof were conducted at a measuring temperature of 21°C and a tension speed of 25 mm/min (distortion speed 50o/min) by using a 10t universal tensile testing machine ("AUTOGRAPH AG-10TB" manufactured by Shimadzu Corporation).

Next, the test piece was subjected to the temperature cycling test (holding at -40°C and 125°C for 30 minutes, respectively), and the bulk strength and the bulk stretch were measured after 500 cycles and 1000 cycles, respectively.

**[Table 1]**

| | Metals(% by mass) | | | | | | | | |
|---|---|---|---|---|---|---|---|---|---|
| | Sn | Ag | Cu | Sb | Bi | In | Co | Ni | Ge |
| Ex. 1 | Residue | 1.0 | 0.7 | 0.2 | 0.2 | 1.0 | 0.03 | 0.05 | 0.005 |
| Com. Ex. 1 | Residue | 1.0 | 0.7 | 0.2 | 0.2 | 1.0 | 0.03 | 0.05 | - |
| Com. Ex. 2 | Residue | 1.0 | 0.7 | 0.2 | 0.2 | 1,0 | 0,03 | - | 0.005 |
| Com. Ex. 3 | Residue | 1.0 0.7 | | 0.2 | 0.2 | 1.0 | - | 0.05 | 0.005 |
| Ex. 2 | Residue | 1.0 | 0.7 | 1.5 | 1.0 | 1.0 | 0.03 | 0.05 | 0.005 |
| Com. Ex. 4 | Residue | 1.0 | 0.7 | 1.5 | 1.0 | 1.0 | 0.03 | 0.05 | - |
| Com. Ex. 5 | Residue | 1.0 | 0.7 | 1.5 | 1.0 | 1.0 | 0.03 | - | 0.005 |
| Com. Ex. 6 | Residue | 1.0 | 0.7 | 1.5 | 1.0 | 1.0 | - | 0.05 | 0.005 |
| Ex. 3 | Residue | 1.0 | 0.7 | 2.8 | 1.8 | 1.0 | 0.03 | 0.05 | 0.005 |
| Com. Ex. 7 | Residue | 1.0 | 0.7 | 2.8 | 1.8 | 1.0 | 0.03 | 0.05 | - |
| Com. Ex. 8 | Residue | 1.0 | 0.7 | 2.8 | 1.8 | 1.0 | 0.03 | - | 0.005 |
| Com. Ex. 9 | Residue | 1.0 | 0.7 | 2.8 | 1.8 | 1.0 | - | 0.05 | 0.005 |
| Ex. 4 | Residue | 0.3 | 0.7 | 0.2 | 0.2 | 1.0 | 0.03 | 0.05 | 0.005 |
| Com. Ex. 10 | Residue | 0.3 | 0.7 | 0.2 | 0.2 | 1.0 | 0.03 | 0.05 | - |
| Com. Ex. 11 | Residue | 0.3 | 0.7 | 0.2 | 0.2 | 1,0 | 0.03 | - | 0.005 |
| Com. Ex. 12 | Residue | 0,3 | 0.7 | 0.2 | 0.2 | 1.0 | - | 0.05 | 0.005 |
| Ex. 5 | Residue | 0.3 | 0.7 | 1.0 | 1.0 | 1.0 | 0.03 | 0.05 | 0.005 |
| Com. Ex. 13 | Residue | 0.3 | 0.7 | 1.0 | 1.0 | 1.0 | 0.03 | 0.05 | - |
| Com. Ex. 14 | Residue | 0.3 | 0.7 | 1.0 | 1.0 | 1.0 | 0.03 | - | 0.005 |
| Com. Ex. 15 | Residue | 0.3 | 0.7 | 1.0 | 1.0 | 1.0 | - | 0.05 | 0,005 |
| Ex. 6 | Residue | 0.3 | 0.7 | 2.5 | 1.5 | 1.0 | 0.03 | 0.05 | 0.005 |
| Com. Ex. 16 | Residue | 0.3 | 0.7 | 2.5 | 1.5 | 1.0 | 0.03 | 0.05 | - |
| Com. Ex. 17 | Residue | 0.3 | 0.7 | 2.5 | 1.5 | 1.0 | 0.03 | - | 0.005 |
| Com. Ex. 18 | Residue | 0.3 | 0.7 | 2.5 | 1.5 | 1.0 | - | 0.05 | 0.005 |
| Ex. 7 | Residue | 0.1 | 0.7 | 0.2 | 0.2 | 1.0 | 0.03 | 0.05 | 0.005 |
| Com. Ex. 19 | Residue | 0.l | 0.7 | 0.2 | 0.2 | 1.0 | 0.03 | 0.05 | - |
| Com. Ex. 20 | Residue | 0.1 | 0.7 | 0.2 | 0.2 | 1.0 | 0.03 | - | 0.005 |
| Com. Ex. 21 | Residue | 0.1 | 0.7 | 0.2 | 0.2 | 1.0 | - | 0.05 | 0.005 |
| Ex. 8 | Residue | 0.1 | 0.7 | 1.0 | 1.0 | 1.0 | 0.03 | 0.05 | 0.005 |
| Com. Ex. 22 | Residue | 0.1 | 0.7 | 1.0 | 1.0 | 1.0 | 0.03 | 0.05 | - |
| Com. Ex. 23 | Residue | 0.1 | 0.7 | 1.0 | 1.0 | 1.0 | 0.03 | - | 0.005 |
| Com. Ex. 24 | Residue | 0.1 | 0.7 | 1.0 | 1.0 | 1.0 | - | 0.05 | 0.005 |
| Ex. 9 | Residue | 0.1 | 0.7 | 2.5 | 1.5 | 1.0 | 0.03 | 0.05 | 0.005 |
| Com. Ex. 25 | Residue | 0.1 | 0.7 | 2.5 | 1.5 | 1.0 | 0.03 | 0.05 | - |
| Com. Ex. 26 | Residue | 01 | 0.7 | 2.5 | 1.5 | 1.0 | 0.03 | - | 0.005 |
| Com. Ex. 27 | Residue | 0.1 | 0.7 | 2.5 | 1.5 | 1.0 | - | 0.05 | 0.005 |
| Com. Ex. 28 | Residue | 3.0 | 0.5 | - | - | - | - | - | - |
| Com. Ex. 29 | Residue | 1.0 | 0.7 | - | - | - | - | - | - |
| Com. Ex. 30 | Residue | 0.3 | 0.7 | - | - | - | - | - | - |
| Com. Ex. 31 | Residue | 0.1 | 0.7 | - | - | - | - | - | - |

**[Table 2]**

| | Joining Strength (N) | | Bulk Strength (N) | | Bulk Stretch (%) | |
|---|---|---|---|---|---|---|
| | Initial Value | After 1000 cycles | Initial Value | Rafter 1000 cycles | Initial Value | After 1000 cycles |
| Ex. 1 | 86 | 78 | 49 | 45 | 34 | 38 |
| Com. Ex. 1 | 85 | 72 | 47 | 44 | 33 | 37 |
| Com. Ex. 2 | 85 | 70 | 70 | 47 | 44 | 32 36 |
| Com. Ex. 3 | 85 | 70 | 46 | 42 | 32 | 35 |
| Ex. 2 | 88 | 84 | 51 | 47 | 35 | 39 |
| Com. Ex. 4 | 88 | 80 | 48 | 45 | 33 | 38 |
| Com. Ex. 6 | 87 | 81 | 48 | 45 | 32 | 35 |
| Ex. 3 | 95 | 90 | 55 | 52 | 40 | 44 |
| Com. Ex. 7 | 92 | 84 | 53 | 51 | 38 | 42 |
| Com. Ex. 8 | 93 | 85 | 53 | 50 | 38 | 41 |
| Cam. Ex. 9 | 93 | 85 | 52 | 51 | 37 | 42 |
| Ex. 4 | 83 | 75 | 45 | 41 | 31 | 35 |
| Com.Ex. 10 | 82 | 70 | 43 | 40 | 30 | 34 |
| Com. Ex. 11 | 85 | 68 | 43 | 40 | 29 | 34 |
| Com. Ex. 12 | 85 | 85 | 42 | 39 | 29 | 32 |
| Ex. 5 | 89 | 82 | 47 | 43 | 32 | 39 |
| E Com, Ex. 13 | 88 | 78 | 44 | 41 | 30 | 38 |
| Com. Ex. 14 | 89 | 79 | 44 | 41 | 29 | 35 |
| Com. Ex. 15 | 87 | 77 | 44 | 40 | 29 | 36 |
| Ex. 6 | 96 | 88 | 51 | 48 | 37 | 41 |
| Cam. Ex. 16 | 95 | 82 | 48 | 47 | 35 | 38 |
| Com. Ex. 17 | 95 | 83 | 48 | 46 | 35 | 38 |
| Com. Ex. 18 | 95 | 95 | 49 | 45 | 34 | 34 |
| Ex. 7 | 85 | 76 | 42 | 38 | 31 | 35 |
| Com. Ex. 19 | 84 | 70 | 40 | 37 | 30 | 34 |
| Com. Ex. 20 | 85 | 68 | 40 | 37 | 29 | 34 |
| Com. Ex. 21 | 85 | 66 | 39 | 36 | 29 | 32 |
| Ex. 8 | 88 | 84 | 44 | 40 | 32 | 39 |
| Com. Ex. 22 | 87 | 78 | 40 | 38 | 30 | 38 |
| Com. Ex. 23 | 88 | 41 | 41 | 37 | 29 | 35 |
| Com. Ex. 24 | 87 | 78 | 40 | 36 | 29 | 36 |
| Ex. 9 | 95 | 88 | 48 | 45 | 37 | 41 |
| Com. Ex. 25 | 94 | 82 | 45 | 44 | 35 | 38 |
| Com. Ex. 26 | 95 | 83 | 45 | 42 | 35 | 38 |
| Com. Ex. 27 | 94 | 82 | 42 | 43 | 34 | 39 |
| Com. Ex. 28 | 82 | 70 | 47 | 42 | 32 | 38 |
| Com. Ex. 29 | 74 | 68 | 38 | 34 | 30 | 36 |
| Com. Ex. 30 | 74 | 62 | 35 | 31 | 28 | 33 |
| Com. Ex. 31 | 74 | 61 | 33 | 28 | 26 | 33 |

As shown in Table 2, it is seen that the low silver solder alloys of Examples 1 to 9 (Ex. 1 to 9) had excellent fatigue resistance (thermal fatigue resistance) because they had excellent stretch and strength, and also had high joining strength and bulk strength, and had high bulk stretch even after the temperature cycling test of 1000 cycles. On the other hand, it is seen that the low silver solder alloys of Comparative Examples 1 to 31 (Com. Ex. 1 to 31) had poor stretch and strength, and had suffered considerable deterioration in the joining strength and bulk strength after the temperature cycling test of 1000 cycles, and had poor fatigue resistance (thermal fatigue resistance) because they did not contain any one of metals selected from antimony, bismuth, indium, cobalt, nickel, and germanium.

## Claims

1. A low silver solder alloy comprising 0.05-2.0% by mass of silver; 1.0% by mass or less of copper; 3.0% by mass or less of antimony; 2.0% by mass or less of bismuth; 4.0% by mass or less of indium; 0.2% by mass or less of nickel; 0.1% by mass or less of germanium; 0.5% by mass or less of cobalt (provided that none of the copper, the antimony, the bismuth, the indium, the nickel, the germanium, and the cobalt is 0% by mass); and the residue is tin.

2. The low silver solder alloy according to claim 1, wherein the silver content is 0.05-1.0% by mass.

3. The low silver solder alloy according to claim 1 or 2, wherein the copper content is 0.01-0.9% by mass.

4. The low silver solder alloy according to any one of claims 1 to 3, wherein the antimony content is 0.1-3.0% by mass.

5. The low silver solder alloy according to any one of claims 1 to 4, wherein the bismuth content is 0.1-2.0% by mass.

6. The low silver solder alloy according to any one of claims 1 to 5, wherein the indium content is 0.1-3.0% by mass.

7. The low silver solder alloy according to any one of claims 1 to 6, wherein the nickel content is 0.001-0.2% by mass.

8. The low silver solder alloy according to any one of claims 1 to 7, wherein the germanium content is 0.001-0.1% by mass.

9. The low silver solder alloy according to any one of claims 1 to 8, wherein the cobalt content is 0.001-0.5% by mass.

10. The low silver solder alloy according to any one of claims 1 to 9, wherein the low silver solder alloy has a melting point of 200-250°C.

11. A solder paste composition containing solder powder of the low silver solder alloy according to any one of claims 1 to 10, and a soldering flux.

12. The solder paste composition according to claim 11, wherein the solder powder of the low silver solder alloy and the soldering flux are contained in a mass ratio of 70:30 to 90:10.
